# EUROPÄISCHE PATENTANMELDUNG

(11) **EP 2 388 109 A2**
(43) Veröffentlichungstag der Anmeldung: **23.11.2011**
(21) Anmeldenummer: 11002459.3
(22) Anmeldetag: 24.03.2011
(51) Int. Cl.: B25J 9/16, G05B 19/401, G05B 19/4099

(54) **Verfahren zum Bearbeiten von Composite-Bauteilen**

(30) Priorität: 19.05.2010 DE 102010021016
(71) Anmelder: LIEBHERR-VERZAHNTECHNIK GmbH, 87437 Kempten (DE)
(72) Erfinder: Mundt, Alois, Dr., 87435 Kempten (DE); Mattern, Thomas, 87669 Rieden (DE); Kennerknecht, Wilhelm, 87509 Immenstadt (DE)
(74) Vertreter: Laufhütte, Dieter

(57) **Zusammenfassung**

Die Erfindung betrifft ein Verfahren zum Bearbeiten von Composite-Bauteilen in einer CNC gesteuerten Bearbeitungsstation. Erfindungsgemäß wird ein Bearbeitungswerkzeug mittels eines Meßsystems an einer vorgegebenen Werkstückkante entlang geführt, wobei es gleichzeitig die Bearbeitungsoperation ausführt und wobei das CNC Steuerprogramm zur Steuerung des Bearbeitungswerkzeuges entsprechend dem Meßergebnis generiert wird. Die Erfindung betrifft weiterhin eine Vorrichtung zur Durchführung des Verfahrens.

## Beschreibung

Die Erfindung betrifft ein Verfahren zum Bearbeiten von großen Composite-Bauteilen in einer CNC gesteuerten Bearbeitungsstation.

Derartig große Composite-Bauteile, wie sie Gegenstand der vorliegenden Erfindung sind, sind z. B. die Rotorblätter für Windkraftanlagen. Diese Rotorblätter werden in aufwendigen Produktionsschritten großteils in Handarbeit hergestellt. Die größten und modernsten Flügel bestehen aus verklebten Glas- und Kohlefasermattern, in die unter Vakuum Epoxydharz injiziert wird. Diese High-Tech-Bauweise sorgt für die benötigte außergewöhnliche Stabilität und Flexibilität, hält die Flügel aber gleichzeitig dünn und leicht.

Prinzipiell besteht das Verfahren zur Herstellung der Rotorblätter aus folgenden Schritten:
Zunächst wird die aus zwei beheizbaren Halbschalen bestehende Werkzeugform mit einem Trennmittel beaufschlagt. Die Werkzeugformhalbschalen werden mit Glasfasermatten und weiterem Verstärkungsmaterial ausgelegt.

Anschließend werden spezielle Schläuche eingelegt, aus denen die Mischung aus Epoxydharz, Härtern und Additiven zugeführt werden soll. Die Glasfasermatten und die eingelegten Schläuche werden anschließend über eine Kunststoffolie, die die gesamte Fläche luftdicht verschließt, abgedeckt. Im folgenden Schritt wird zwischen dem Werkzeug und der Folie ein Vakuum erzeugt. Dieses Vakuum saugt die flüssige Epoxydharz-Härtermischung durch die Schläuche ins Werkzeug, wodurch die Glasfasermatten und das andere Verstärkungsmaterial mit dem Epoxydharz, dem Härter und dem Additiv getränkt wird. Nach vollständiger Tränkung des Verstärkungsmaterials werden die Rotorblatthälften bei etwa 70 bis 120°C gehärtet.

Nach Erstellen der jeweiligen Halbschalen werden die Blatthälften des Rotorblatts bildenden Halbschalen miteinander verklebt. Beim Verkleben der beiden Rotorblatthälften dringt Harz aus der Klebenaht nach außen. Dieser Überstand muß für die weitere Fertigstellung entfernt werden. Dies geschieht beim Fertigungsprozeß immer noch in Handarbeit. Aufgrund der Gefährlichkeit der bei der Bearbeitung entstehenden GFK-Stäube bzw. GFK-Partikeln müssen die Arbeiter aus Arbeitsschutzgründen Vollschutzanzüge mit Gesichtsmasken tragen. Bei der händischen Bearbeitung muß der Überstand der Verbindungsnaht mit einer Flex (Trennscheibe) abgetrennt werden. Anschließend werden die Reste des Überstands mit einer Schleifscheibe verschliffen.

Im Stand der Technik wurde bereits der Versuch unternommen, die entsprechende notwendige Handarbeit beim Verschleifen der Naht von Werkstücken maschinell auszuführen.

In der US 5,407,415 A wird eine Einheit zur Kantenbearbeitung von großen und komplexen Flugzeugteilen beschrieben. Hier wird eine Portalanlage mit einem Arm eingesetzt, an welchem ein Bearbeitungskopf mit Werkzeug montiert ist. Die Bewegung des Armes erfolgt nach einem vorprogrammierten Weg relativ zu einem Bearbeitungstisch. Da das Werkzeug entlang des vorprogrammierten Weges bewegt wird, ist zum einen eine aufwendige Lehrfahrt notwendig und zum andern eine sehr wiederholgenaue Lage des Werkstücks Voraussetzung für eine genaue Werkstückbearbeitung.

In der US 9,938,501 A wird eine Portaleinheit bestehend aus zwei Arbeitsbereichen zur Bearbeitung von Bootsrümpfen beschrieben. Dabei geht es um die Konturbearbeitung von einem Bootsrumpf und einem Bootsdeck sowie die Werkzeugbereitstellung für diese Aufgabe. Zum anderen wird eine Absauganlage zur Absaugung von Glasfaserschleifpartikeln bereitgestellt. Das Bearbeitungswerkzeug wird hier an einem Portal geführt.

Aus der WO 2008/077844 ist eine Einrichtung zur Oberflächenbehandlung von Rotorblättern für Windkraftanlagen bekannt. Hier wird es bereits beschrieben, ein Schleifwerkzeug mit einem Portal längs des Rotors zu verfahren und dabei segmentweise die Oberfläche zu bearbeiten.

Die WO 2008/110899 beschreibt eine mobile Bearbeitungseinheit zur Oberflächenbearbeitung von großen Bauteilen, wie beispielsweise Booten. Hier wird mittels eines Projektors strukturiertes Licht auf die Oberfläche projiziert, wobei das Ergebnis mittels zweier Kameras aufgenommen wird. Aus dem aufgenommenen Abbild wird mittels Computerunterstützung ein präzises 3D-Abbild der Oberfläche erzeugt und für die Bearbeitung herangezogen.

Aufgabe der vorliegenden Erfindung ist es nun, ein Verfahren zur automatisierten Bearbeitung von großen und vor allem komplexen Composite-Bauteilen entlang einer am Werkstück vorhandenen Kante zu schaffen.

Diese Aufgabe wird erfindungsgemäß durch ein Verfahren mit den Merkmalen des Anspruchs 1 gelöst.

Demzufolge wird das große Composite-Bauteil in einer CNC-gesteuerten Bearbeitungsstation bearbeitet. Das Bearbeitungswerkzeug wird mittels eines Meßsystems an einer vorgegebenen Bauteilkante entlang geführt. Dabei führt es gleichzeitig die Bearbeitungsoperation aus. Das CNC Steuerprogramm zur Steuerung des Bearbeitungswerkzeuges wird zeitgleich entsprechend dem Meßergebnis des Meßsystems generiert. Erfindungsgemäß wird also eine Echtzeit-Konturerfassung in 3 Dimensionen bereitgestellt, so dass der Bearbeitungskopf mit dem Werkzeug entlang der zu bearbeitenden Kante oder mit einem genau definierten Abstand zu dieser Kante geführt werden kann, wobei die Bearbeitungsaufgabe ausgeführt werden kann. Bei dieser Bearbeitungsaufgabe handelt es sich beispielsweise darum, einen Material-überstand, wie er sich bei dem Zusammenfügen der Bauteile ergibt, zu entfernen. Aber auch andere Bearbeitungsaufgaben, wie ein anschließendes Schleifen, eine notwendige Bohroperation oder Fräsaufgaben können mit dem Bearbeitungswerkzeug unter Berücksichtigung des erfindungsgemäßen Verfahrens durchgeführt werden.

Bevorzugte Ausgestaltungen der Erfindung ergeben sich aus den sich an den Hauptanspruch anschließenden Unteransprüchen.

Die Werkstückkante des Composite-Bauteils wird mittels des geeigneten Meßsystems, das vorzugsweise aus einem Lasertriangulationssensor bestehen kann, vermessen. Der Sensor ist hierzu auf dem Bearbeitungskopf montiert und bewegt sich zusammen mit diesem in Richtung der Bearbeitungsbewegung. Der Sensor wird dabei vor dem eigentlichen Werkzeug montiert und ermittelt den Verlauf der Werkstückkante kurz vor dem Werkzeugeingriff.

Mit Hilfe der geeigneten Computersteuerung, das heißt der CNC-Steuerung, wird aus dem Meßsignal der Kantenverlauf ermittelt, so dass der Bearbeitungskopf bzw. das Bearbeitungswerkzeug in den drei Raumebenen zeitgleich nachgeführt werden kann. Dadurch muß das zu bearbeitende Werkstück für die Bearbeitung nicht besonders ausgerichtet werden, da die Bearbeitungsaufgabe abhängig von der vorhandenen Werkstückkante ausgeführt wird.

Gemäß einer besonders vorteilhaften Ausgestaltung der Erfindung kann das Meßsignal mit hinterlegten Daten, wie z. B. CAD Daten, abgeglichen werden. Damit kann während der Bearbeitung das CNC-Bearbeitungsprogramm ständig an die reale Kontur angepaßt werden. Gewisse Ungenauigkeiten der Werkstückkante können anhand der Vorgabedaten ausgeglichen werden.

Weiter können durch den Abgleich mit hinterlegten Daten Sicherheitszonen eingerichtet werden. Bei zu großen Abweichungen kann dann der Bearbeitungsprozeß abgebrochen werden, bevor es zu einer nachhaltigen Beschädigung des Werkstückes kommt.

Zu Beginn des Bearbeitungszyklus muß mindestens ein Punkt auf dem Werkstück festgelegt und in die CNC-Steuerung eingegeben werden, wobei gleichzeitig ein Richtungsvektor vorgegeben werden muß. Alternativ hierzu können aber auch zwei Punkte am Werkzeug festgelegt und in das CNC-Steuersystem eingegeben werden. Anschließend orientiert sich der Bearbeitungsprozeß an der vorgegebenen Werkstückkante selbsttätig.

Ein weiterer Aspekt der Erfindung besteht darin, dass durch die Aufnahme des Motorstroms des Bearbeitungswerkzeuges die Vorschubgeschwindigkeit bzw. Werkzeugdrehzahl des vorzugsweise drehenden Werkzeuges anhand von bestimmten Randbedingungen nachgeführt werden kann. Hier kann abhängig vom Motorstrom, beispielsweise bei geringerer Dichte des zu entfernenden Materials die Vorschubgeschwindigkeit erhöht werden, bzw. bei sehr hohem Materialabtrag die Vorschubgeschwindigkeit reduziert werden. Damit kann eine optimale Bearbeitungszeit erzielt werden, ohne dass es z. B. zu thermischen Schädigungen des Werkstücks durch zu hohe Vorschubgeschwindigkeit und damit verbundener Wärmeeinbringung kommen kann. Gleichzeitig kann damit dem Abnutzungs- und Verschleißzustand des Werkzeugs Rechnung getragen werden.

Der Bearbeitungskopf kann vorteilhaft mit einem automatischen Werkzeugwechselsystem ausgestattet sein, um jeweils das für die Bearbeitungsaufgabe passende Werkzeug einwechseln zu können.

Die Werkzeugdaten und wichtige Informationen wie der Abstand des Triangulationsmeßsystems zum Werkzeugvorratsbereich können dazu in der Maschinensteuerung hinterlegt sein.

Das erfindungsgemäße Verfahren lässt sich vorteilhaft nicht nur bei der Herstellung von Windkraftrotoren anwenden, sondern auch beim Herstellen von Booten, Flugzeugbauteilen, Fahrzeugkomponenten oder ähnlichen komplexen Bauteilen.

Weitere Merkmale, Einzelheiten und Vorteile der Erfindung werden anhand eines in der Zeichnung dargestellten Ausführungsbeispiels näher erläutert. Es zeigen:
- Figur 1:: eine schematische dreidimensionale Darstellung eines zu bearbeitenden Composite-Bauteils in einer erfindungsgemäßen Bearbeitungsstation,
- Figur 2:: eine Schrägansicht auf das Detail eines Bearbeitungskopfes, der zur Durchführung des erfindungsgemäßen Verfahrens dient und
- Figur 3:: eine Draufsicht auf den Bearbeitungskopf gemäß Figur 2.

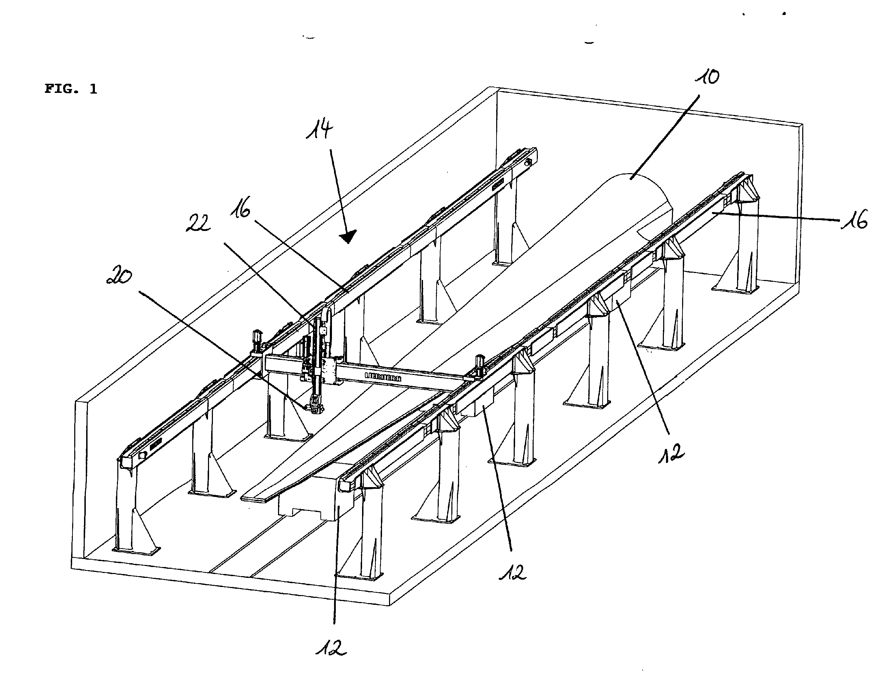

In der Figur 1 ist beispielhaft ein Rotorblatt 10 als zu bearbeitendes Composite-Bauteil dargestellt. Bei dem hier dargestellten Rotorblatt 10 sind gerade die Rotorblatthälften miteinander verklebt worden. Aus der Klebenaht ist in hier nicht näher dargestellter Weise Harz nach außen getreten, so dass hier ein Überstand entstanden ist, der für die weitere Fertigstellung entfernt werden muß. Hierzu ist das Rotorblatt 10 stationär auf einer mehrteiligen Bauteilehalterung 12 aufgespannt. Das aufgespannte Rotorblatt 10 ist in der Arbeitshalle von einem Flächenportal 14 umgeben, in welchem jeweils seitlich erhöht die Portalführungen 16 angeordnet sind. In dem Flächenportal 14 ist ein Bearbeitungswerkzeug 20 an einer Hubachse 22 angeordnet.

Über das Flächenportal 14 kann der Bearbeitungskopf 20 mit dem angeordneten Bearbeitungswerkzeug entlang des zu bearbeitenden Composite-Bauteils zur Bearbeitung des linienförmigen Nahtbereichs verfahren werden.

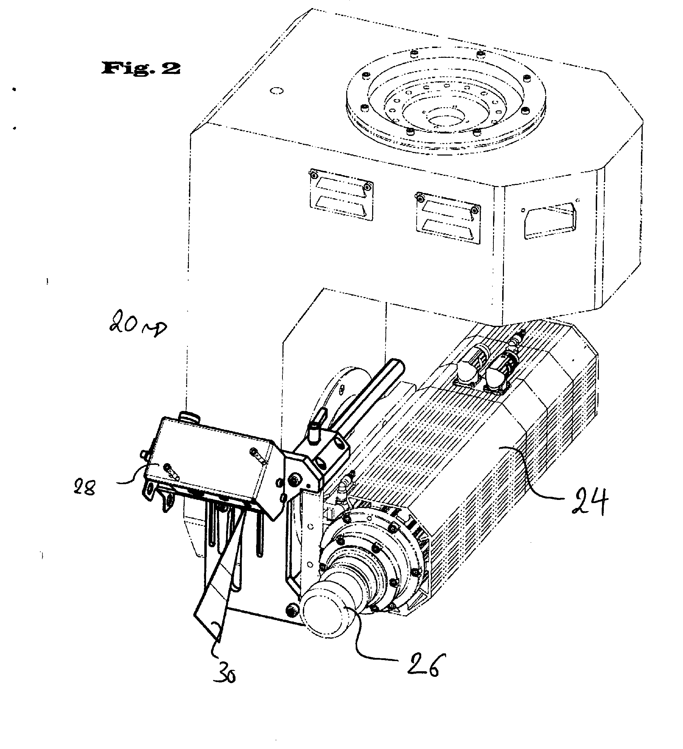

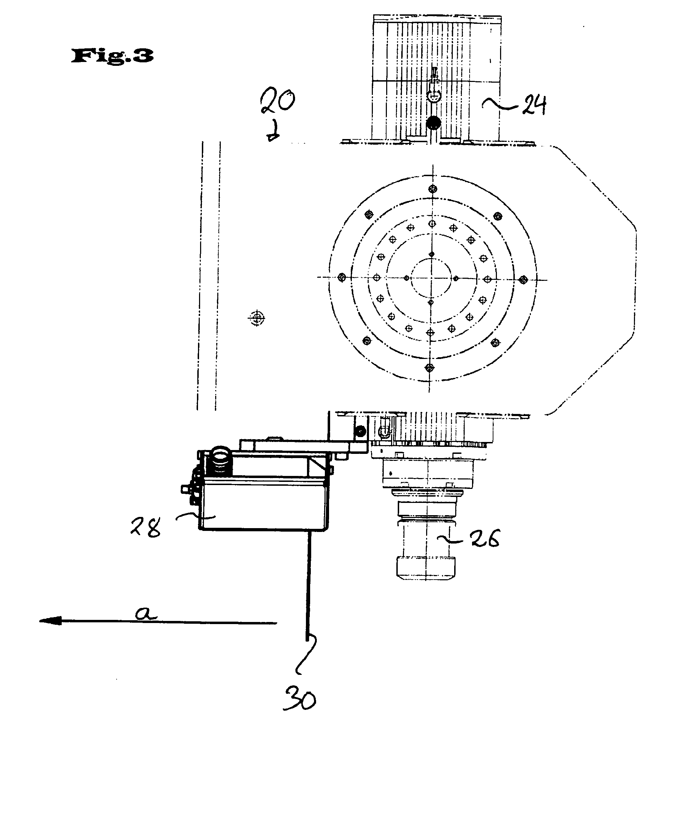

In den Figuren 2 und 3 ist der Bearbeitungskopf 20 detaillierter dargestellt. In dem Bearbeitungskopf 20 ist der Antrieb 24 für das hier selbst nicht dargestellte Bearbeitungswerkzeug angeordnet. Mittels des Antriebs 24 wird eine Werkzeugaufnahme 26 in Rotation versetzt. Auf der Werkzeugaufnahme kann das jeweils zu verwendende Werkzeug automatisch aufgenommen werden. Wenn ein Überstand an dem Composite-Bauteil abgeschnitten werden muß, handelt es sich bei dem Werkzeug um eine hier nicht näher dargestellte Trennscheibe, die vorzugsweise seitlich mit Diamanten beschichtet ist und vorzugsweise Schlitze für die Staubausbringung aufweist. Es können aber auch beliebige andere rotierende Werkzeuge auf der Werkzeugaufnahme 26 aufgenommen werden. Am Bearbeitungskopf ist neben dem Werkzeug ein Meßsystem 28 angeordnet, das im vorliegenden Fall aus einem Lasertriangulationssensor besteht. Mittels diesem wird ein optisches Meßsignal 30 ausgegeben.

Wie insbesondere der Figur 3 zu entnehmen ist, ist das Meßsystem 28 derart in Bewegungsrichtung a vor der Werkzeugaufnahme 26 angeordnet, dass das Meßsignal 30 die Koordinaten des zu bearbeitenden Bereichs erfaßt, bevor das Werkzeug in Eingriff kommt. Der Sensor ist also nahe an der Bearbeitungsstelle montiert. Da die Bewegungssteuerung entsprechend diesem Sensor erfolgt, geht die Systemsteifigkeit des Bearbeitungssystems insgesamt nicht in die Bearbeitungsgenauigkeit ein. Entsprechende Abweichungen werden von dem Sensor erkannt und sofort durch die dreidimensionale Raumausrichtung des Bearbeitungskopfes 20 ausgeglichen.

Im hier dargestellten Ausführungsbeispiel ist der Bearbeitungskopf an ein Flächenportal angeordnet. In gleicher Weise kann der Bearbeitungskopf aber an einer beliebig anderen Verfahreinheit befestigt werden, beispielsweise an einem Roboterarm, wobei der Roboter auf einer Bodenfahrschiene oder einer abgehängten Schiene entlang des zu bearbeitenden Composite-Bauteils verfahrbar ist oder einem Roboterarm, der in einem Linienportal geführt ist oder einer anderen gleichwertigen Anordnung.

In einer alternativen Ausführungsvariante kann der Bearbeitungskopf auch an einem stehenden Roboter angeordnet werden, wenn das Bauteil entsprechend klein ist, so dass der Roboterarm des stehenden Roboters die zu bearbeitenden Bereiche des Composite-Bauteils erreicht.

## Patentansprüche

1. Verfahren zum Bearbeiten von Composite-Bauteilen in einer CNC gesteuerten Bearbeitungsstation,
**dadurch gekennzeichnet,**
**dass** ein Bearbeitungswerkzeug mittels eines Meßsystems an einer vorgegebenen Werkstückkante entlang geführt wird, wobei es gleichzeitig die Bearbeitungsoperation ausführt, während das CNC Steuerprogramm zur Steuerung des Bearbeitungswerkzeuges entsprechend dem Meßergebnis generiert wird.

2. Verfahren nach Anspruch 1, **dadurch gekennzeichnet, dass** das Meßergebnis des Meßsystems während der Bearbeitung mit eingespeicherten CAD Daten und/oder individuell aufgenommenen Meßpunkten des Composite-Bauteils abgeglichen wird, so dass einerseits das CNC Steuerprogramm entsprechend den aktuell aufgenommenen Meßwerten des Meßsystems gegenüber den gespeicherten CAD Daten bzw. vorab gespeicherten Meßpunkten modifiziert und aktualisiert wird, dass aber andererseits bei einer zu großen Abweichung der gemessenen Bearbeitungskontur des Composite-Bauteils von den gespeicherten CAD Daten bzw. vorab gespeicherten Meßpunkten der Bearbeitungsprozeß unterbrochen wird.

3. Verfahren nach Anspruch 1 oder 2, **dadurch gekennzeichnet, dass** die Betriebsparameter des Werkzeugs, wie beispielsweise Vorschubgeschwindigkeit und/oder Drehzahl, nach einem ausgewählten Betriebsparameter, wie beispielsweise der Stromaufnahme des Werkzeugantriebs, unter Berücksichtigung technologischer Randbedingungen bei der Bearbeitung des Composite-Bauteils , wie beispielsweise die Schnittgeschwindigkeit zur Vermeidung der Überhitzung des Composite-Bauteils, gesteuert werden.

4. Verfahren nach einem der Ansprüche 1 bis 3, **dadurch gekennzeichnet, dass** die Betriebsparameter des Werkzeugs, wie beispielsweise die Vorschubgeschwindigkeit, in Abhängigkeit vom Werkzeugverschleiß geregelt wird.

5. Verfahren nach einem der Ansprüche 1 bis 4, **dadurch gekennzeichnet, dass** es bei der Herstellung von Rotorblättern für Windkraft-Rotoren, Booten, Flugzeugbauteilen oder Fahrzeugbauteilen angewendet wird.

6. Vorrichtung zur Durchführung eines Verfahrens nach einem der Ansprüche 1 bis 5, **dadurch gekennzeichnet, dass** das Bearbeitungswerkzeug zusammen mit dem Meßsystem an einem Bearbeitungskopf angeordnet ist.

7. Vorrichtung nach Anspruch 6, **dadurch gekennzeichnet, dass** das Bearbeitungswerkzeug mit einem automatischen Werkzeugwechselsystem ausgestattet ist.

8. Vorrichtung nach Anspruch 6 oder 7, **dadurch gekennzeichnet, dass** der Bearbeitungskopf über ein Flächen- oder Linienportal geführt wird.

9. Vorrichtung nach einem der Ansprüche 6 oder 7, **dadurch gekennzeichnet, dass** der Bearbeitungskopf an einem Roboterarm angeordnet ist, wobei der Roboter auf einer Bodenfahrschiene oder einer abgehängten Schiene entlang des zu bearbeitenden Composite-Bauteils verfahrbar ist oder als stationärer Roboter ausgebildet ist.

10. Vorrichtung nach einem der vorangehenden Ansprüche, **dadurch gekennzeichnet, dass** das Meßsystem einen Lasertriangulationssensor aufweist.
